# EUROPÄISCHE PATENTSCHRIFT

(11) **EP 2 253 442 B1**
(45) Veröffentlichungstag und Bekanntmachung des Hinweises auf die Patenterteilung: **21.12.2016**
(21) Anmeldenummer: 10163084.6
(22) Anmeldetag: 18.05.2010
(51) Int. Cl.: B23D 59/00, B23Q 17/20, B27D 5/00, B27M 1/00

(54) **Bearbeitungsvorrichtung und Bearbeitungsverfahren zur Bearbeitung von plattenförmigen Werkstücken**
Processing device and process for working a panel-shaped workpiece
Machine et procédé de transformation pour une pièce en forme de panneau

(30) Priorität: 19.05.2009 DE 202009007193 U
(43) Veröffentlichungstag der Anmeldung: 24.11.2010
(73) Patentinhaber: HOMAG GmbH, 72296 Schopfloch (DE)
(72) Erfinder: Rathgeber, Peter, D-72280 Dornstetten (DE)
(74) Vertreter: Hoffmann Eitle

(56) Entgegenhaltungen:
- EP-A1- 2 253 441
- WO-A2-02/059019
- CH-A- 536 698
- DE-A1- 19 741 163
- DE-A1- 19 751 033
- DE-A1-102004 054 670
- DE-C1- 19 901 557

## Beschreibung

### Technisches Gebiet

Die Erfindung betrifft eine Bearbeitungsvorrichtung zum Bearbeiten von plattenförmigen Werkstücken, welche bevorzugt zumindest abschnittsweise aus Holz, Holzwerkstoffen, Kunststoff oder dergleichen bestehen. Die Bearbeitungsvorrichtung umfasst eine Fördereinrichtung zum Fördern der plattenförmigen Werkstücke, eine Ausrichteinheit zum Ausrichten der Werkstücke auf der Fördereineinrichtung sowie eine Formatbearbeitungseinrichtung zum Formatbearbeiten der Werkstücke.

### Stand der Technik

Im Stand der Technik sind Bearbeitungsvorrichtungen mit einer Formatbearbeitungseinrichtung zum Formatbearbeiten zumindest einer ersten schmalen Seitenfläche eines plattenförmigen Werkstücks bekannt. Diese Maschinen werden verwendet, um insbesondere Werkstücke in kleinen Losgrößen zu bearbeiten.

Diese Bearbeitungsvorrichtungen haben den Nachteil, dass in Abhängigkeit der Art der Formatbearbeitung unterschiedlich breite und/oder nicht winkelhaltige Werkstücke entstehen und teilweise hoher Nachbearbeitungsbedarf mit zusätzlichen Formatbearbeitungsaggregaten besteht, für welchen eine zusätzliche Bearbeitungszeit und ein hoher Zerspannungsaufwand einkalkuliert werden muss. Des Weiteren ist es bei diesen Bearbeitungsvorrichtungen nachteilig, dass insbesondere bei der Herstellung von Werkstücken in kleinen Losgrößen bzw. Stückzahlen, Bearbeitungsaggregate der Bearbeitungsvorrichtung teilweise nicht verwendet werden und die Bearbeitungsvorrichtung damit unwirtschaftlich betrieben wird.

Ferner führen Werkstücke mit unterschiedlicher Breite bzw. Werkstücke, welche nach der Bearbeitung nicht den geforderten Maßen entsprechen, dazu, dass sich in einer nachfolgenden Bearbeitung diese Fehler summieren und im Ergebnis Werkstücke produziert werden, die nicht den Maßanforderungen entsprechen.

Ferner offenbart die DE 10 2004 054 670 A1 eine Bearbeitungsvorrichtung nach dem Oberbegriff von Anspruch 1.

### Darstellung der Erfindung

Der Erfindung liegt die Aufgabe zugrunde, eine Bearbeitungsvorrichtung zu schaffen, die die bekannten Probleme aus dem Stand der Technik löst und ferner dazu geeignet ist, bei geringem Formatbearbeitungsaufwand gleichmäßige Bearbeitungsergebnisse zu erzielen.

Die Lösung der Aufgabe erfolgt durch den Gegenstand der unabhängigen Ansprüche 1 und 9. Bevorzugte Ausgestaltungen der Erfindung ergeben sich aus den Unteransprüchen.

Der Erfindung liegt der Gedanke zugrunde, die Bearbeitungsvorrichtung derart weiterzuentwickeln, um trotz variierender Werkstückgeometrien gleichmäßige Bearbeitungsergebnisse mit geringem Formatbearbeitungsaufwand zu erzielen.

Demgemäß weist die Bearbeitungsvorrichtung zum Bearbeiten von plattenförmigen Werkstücken, welche bevorzugt zumindest abschnittsweise aus Holz, Holzwerkstoffen, Kunststoff oder variierender Werkstückgeometrien gleichmäßige Bearbeitungsergebnisse mit geringem Formatbearbeitungsaufwand zu erzielen.

Demgemäß weist die Bearbeitungsvorrichtung zum Bearbeiten von plattenförmigen Werkstücken, welche bevorzugt zumindest abschnittsweise aus Holz, Holzwerkstoffen, Kunststoff oder dergleichen bestehen, eine Fördereinrichtung zum Fördern der plattenförmigen Werkstücke in einer Förderrichtung, eine Ausrichteinheit zum Ausrichten der Werkstücke auf der Fördereinrichtung sowie eine Formatbearbeitungseinrichtung zum Formatbearbeiten zumindest einer ersten schmalen Seitenfläche des Werkstück auf. Dabei ist eine Messeinrichtung zum Vermessen der plattenförmigen Werkstücke der Formatbearbeitungseinrichtung nachgeordnet vorgesehen und die Ausrichteinheit und bevorzugt auch die Formatbearbeitungseinrichtung sind in einer von der Förderrichtung abweichenden Richtung verstellbar.

Durch Ausführen der Ausrichteinheit und bevorzugt auch der Formatbearbeitungseinrichtung als in einer von der Förderrichtung abweichenden Richtung verstellbar, ist es mit Vorteil möglich, zum Einen das Werkstück vor dem Bearbeiten entsprechend für eine maßgenaue Bearbeitung günstig auszurichten und/oder zum Anderen die Formatbearbeitungseinrichtung so anzuordnen, dass das Werkstück optimal bzw. maßgenau bearbeitet werden kann. Die der Formatbearbeitungseinrichtung nachgeordnete Messeinrichtung trägt dabei dazu bei, die bearbeiteten Werkstücke zu vermessen und die Messergebnisse für zukünftige Bearbeitungen oder Folgebearbeitungen des Werkstücks zur Verfügung zu stellen, um die Ausrichteinheit und bevorzugt auch die Formatbearbeitungseinrichtung entsprechend verstellen zu können.

Gemäß der Erfindung weist die Bearbeitungsvorrichtung ferner eine Steuereinrichtung auf, die eingerichtet ist, die Ausrichteinheit und bevorzugt die Formatbearbeitungseinrichtung in Abhängigkeit von einem Messergebnis der Messeinrichtung und/oder der Kantenmesseinrichtung in einer von der Durchlaufrichtung abweichenden Richtung zu verstellen. Auf diese Weise kann besonders flexibel auf variierende Plattengeometrien und auf eine variierende Dicke des Kantenmaterials eingegangen werden und das Werkstück jeweils entsprechend ausgerichtet werden. Auf diese Weise ist eine besonders genaue Fertigung mit wenig Ausschussteilen möglich. Dies ist besonders vorteilhaft bei einer Fertigung mit der Losgröße 1.

Gemäß einer Weiterbildung der erfindungsgemäßen Bearbeitungsvorrichtung ist vorgesehen, dass die Messeinrichtung mindestens zwei Messeinheiten aufweist, die bevorzugt an gegenüberliegenden Seiten der Fördereinrichtung angeordnet sind. Auf diese Weise ist es möglich, in einem Messvorgang die Breite des bearbeiteten Werkstücks zu erfassen. Dabei kann, insbesondere wenn in der Formatbearbeitungseinrichtung auf die schmale Seitenfläche des Werkstücks eine Kante aufgebracht wurde, festgestellt werden, welche Dicke die aufgebrachte Kante aufweist, da die ursprüngliche Ausrichtung des Werkstücks aufgrund des definierten Ausrichtens an der Ausrichteinheit bekannt ist. Ferner kann durch Vermessen der zu der ersten schmalen Seitenfläche gegenüberliegenden zweiten schmalen Seitenfläche dieses Maß ebenfalls besonders vorteilhaft bestimmt werden. Alternativ kann die Messeinrichtung auch als eine einzelne Messeinrichtung, insbesondere als lasergeschützte Messeinrichtung oder als Messeinrichtung mit einer optischen Erfassungseinheit, wie z. B. einer Kamera, ausgeführt sein.

Gemäß einer Ausführungsform der Erfindung ist zumindest eine Messeinheit, auf der der Formatbearbeitungseinrichtung gegenüberliegenden Seite der Fördereinrichtung vorgesehen. Auf diese Weise ist es besonders vorteilhaft möglich, die Werkstückabmessung auf der der Formatbearbeitungseinrichtung gegenüberliegenden Seite zu ermitteln und dieses Maß bei weiteren Bearbeitungen mit der Bearbeitungsvorrichtung und/oder einer weiteren Bearbeitungsvorrichtung zu verwenden.

Ferner weist die Bearbeitungsvorrichtung in einer besonders bevorzugten Ausführungsform eine Schmalflächenveredelungseinrichtung, insbesondere eine Kantenanbringvorrichtung auf. Gerade im Hinblick auf eine Schmalflächenveredelungseinrichtung ist die nachgeordnete Messeinrichtung vorteilhaft, da Kantenmaterial, insbesondere wenn es auf Rollen aufgewickelt ist, fertigungsbedingt gewissen Schwankungen in seiner Dicke unterliegt, so dass beispielsweise bei einer 2mm dicken Kante Schwankungen im Bereich von ± 0,2mm möglich sind. Dies führt dazu, dass mit einer erfindungsgemäßen Bearbeitungsvorrichtung bearbeitete Werkstücke besonders präzise gefertigt werden können, da das von der Messeinrichtung erhaltene Maß für die Folgebearbeitung der weiteren Seitenflächen, insbesondere der gegenüberliegenden zweiten schmalen Seitenfläche des Werkstücks verwendet werden kann.

Um noch genauere Kenntnisse über die Dicke des Kantenmaterials zu erlangen, kann gemäß einer Weiterbildung der Erfindung eine Kantenmesseinrichtung zum Messen der Abmessungen, insbesondere der Dicke des Kantenmaterials, vorgesehen sein. Somit können Toleranzen der Kantendicke bereits vor dem Anbringen der Kante bei der Formatbearbeitung berücksichtigt werden.

Gemäß einer weiteren Ausführungsform weist die Ausrichteinheit der Bearbeitungsvorrichtung mindestens zwei verfahrbare Greifelemente auf. Auf diese Weise wird sichergestellt, dass das Werkstück während der Bearbeitung auf der Fördereinrichtung nicht verrutscht.

Gemäß einer weiteren besonders bevorzugten Ausgestaltung der Erfindung weist die Fördereinrichtung eine Rückführeinrichtung, insbesondere eine Rückführeinrichtung mit einer Dreheinrichtung zum horizontalen Drehen des Werkstücks auf, um die Werkstücke zu einer erneuten Bearbeitung zu der Bearbeitungsvorrichtung zurückzuführen. Auf diese Weise ist es möglich, in einer erfindungsgemäßen Bearbeitungsvorrichtung alle vier schmalen Seitenflächen des plattenförmigen Werkstücks zu bearbeiten und die Ausrichteinheit und/oder die Formatbearbeitungseinrichtung in Abhängigkeit des Messergebnisses der Messeinrichtung auszurichten.

Die der Erfindung zugrunde liegende Aufgabe wird ferner durch ein Bearbeitungsverfahren nach Anspruch 9 gelöst.

Durch Ausführen der Ausrichteinheit und bevorzugt auch der Formatbearbeitungseinrichtung als in einer von der Förderrichtung abweichenden Richtung verstellbar, ist es mit Vorteil möglich, zum Einen das Werkstück vor dem Bearbeiten entsprechend für eine maßgenaue Bearbeitung günstig auszurichten und/oder zum Anderen die Formatbearbeitungseinrichtung so anzuordnen, dass das Werkstück optimal bzw. maßgenau bearbeitet werden kann. Eine der Formatbearbeitungseinrichtung nachgeordnete Messeinrichtung trägt dabei dazu bei, die bearbeiteten Werkstücke zu vermessen und die Messergebnisse für zukünftige Bearbeitungen oder Folgebearbeitungen des Werkstücks zur Verfügung zu stellen, um die Ausrichteinheit undbevorzugt auch die Formatbearbeitungseinrichtung entsprechend verstellen zu können. Auf diese Weise werden besonders genaue Bearbeitungsergebnisse erzielt.

Gemäß einer bevorzugten Ausgestaltung des Bearbeitungsverfahrens wird nach dem Formatbearbeiten der ersten schmalen Seitenfläche des Werkstücks mindestens eine zweite, der ersten Seitenfläche gegenüberliegende schmale Seitenfläche des Werkstücks bearbeitet, wobei die Verstellung der Ausrichteinheit und/oder der Formatbearbeitungseinrichtung in Anhängigkeit des Messergebnisses der Messeinrichtung erfolgt. Durch Bearbeiten der zweiten schmalen Seitenfläche im Anschluss an die Bearbeitung der ersten schmalen Seitenfläche ist es möglich die von der Messeinheit erfassten Maße mit Vorteil für die Bearbeitung der zweiten schmalen Seitenfläche einzusetzen, so dass das Werkstück im Anschluss an die Bearbeitung die Toleranzen hinsichtlich der Breite des Werkstücks erfüllt.

Ferner werden die Werkstücke erfindungsgemäß nach dem Vermessen durch die Messeinrichtung mittels einer Rückführeinrichtung erneut der Bearbeitungsvorrichtung zuzuführen, wobei die Werkstücke in der Rückführeinrichtung durch eine Dreheinrichtung gedreht werden können. Auf diese Weise kann ein besonders hoher Durchsatz an Werkstücken in der Bearbeitungseinrichtung gefahren werden, so dass die Bearbeitungseinrichtung besonders gut ausgelastet werden kann.

### Kurze Beschreibung der Zeichnungen

- Fig. 1: zeigt eine erfindungsgemäße Bearbeitungsvorrichtung in einer ersten Ausführungsform, bei welcher die schmale Seitenfläche eines Werkstücks von der Ausrichteinheit ausgerichtet wird,
- Fig. 2: zeigt eine erfindungsgemäße Bearbeitungsvorrichtung beim Bearbeiten einer schmalen Seitenfläche des Werkstücks mittels einer Formatbearbeitungseinrichtung, und
- Fig. 3: zeigt eine erfindungsgemäße Bearbeitungsvorrichtung mit Greifelementen zum Ausrichten der Werkstücke.

### Ausführliche Beschreibung bevorzugter Ausführungsformen der Erfindung

Die Erfindung wird im Folgenden anhand der gezeigten Figuren beispielhaft beschrieben. Die Bearbeitungsvorrichtung 10 dient bevorzugt dazu, plattenförmige Werkstücke 11, wie sie beispielsweise in der Möbelindustrie verwendet werden, mit einer Kante zu versehen.

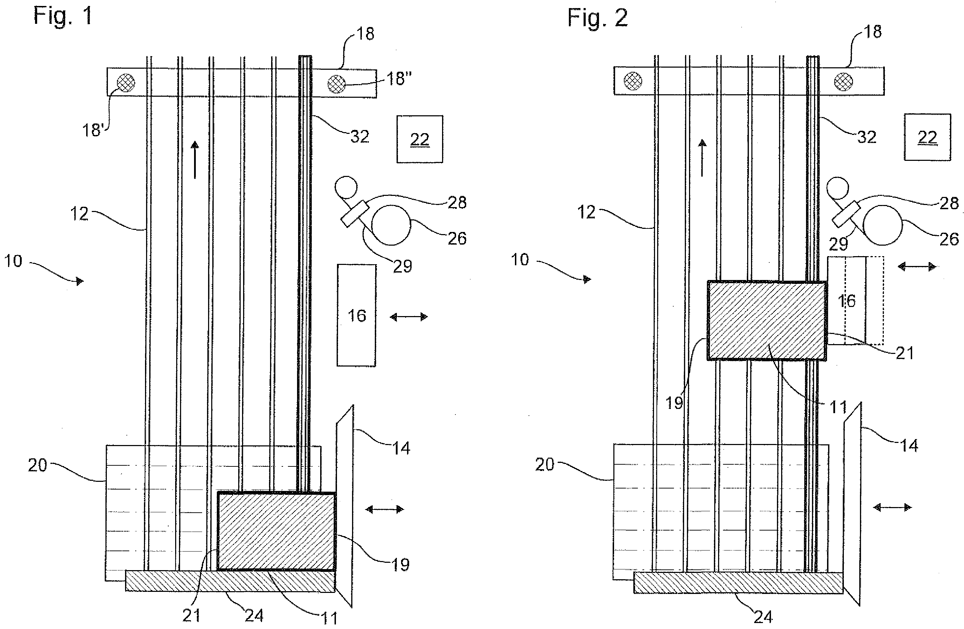

In diesem Zusammenhang zeigt Fig. 1 eine Bearbeitungsvorrichtung 10 zur Bearbeitung der plattenförmigen Werkstücke 11 mit einer Fördereinrichtung 12 zum Fördern der Werkstücke 11 in einer Förderrichtung, welche in Fig. 1 durch einen Pfeil dargestellt ist.

Vor dem Eintritt in die Bearbeitungsvorrichtung 10 wird zunächst ein Werkstück 16 auf der Fördereinrichtung 12 angeordnet. Dies kann entweder manuell oder mittels einer Werkstückzuführung 20 durchgeführt werden. Das Werkstück 16 wird, insbesondere mittels der Werkstückzuführung 20, an der Ausrichteinheit 14, welche einen Winkelanschlag 24 umfassen kann, ausgerichtet, indem es an diese angelegt, und anschließend auf der Fördereinrichtung 12 mittels einem Druckelement 32 fixiert wird. Das Druckelement 32 drückt das Werkstück 11 dabei von oben auf die Fördereinrichtung 12, so dass das Werkstück 11 während dem Fördern und dem Bearbeiten nicht verdreht werden kann.

Das Werkstück 11 fährt alsdann auf der Fördereinrichtung 12 in Richtung der Förderichtung (gezeigt durch den nach oben weisenden Pfeil in Fig. 1) zu der Formatbearbeitungseinrichtung 16. Diese Formatbearbeitungseinrichtung 16 wird entweder von dem Werkstück 11 mit in etwa gleichbleibender Geschwindigkeit von bis zu 800mm/s, bevorzugt bis zu 500mm/s, durchfahren oder die Fördereinrichtung 12 hält an, sobald das Werkstück 11 auf "Höhe" der Formatbearbeitungseinrichtung 16 ist und diese bearbeitet anschließend das Format zumindest einer ersten schmalen Seitenfläche 19 des Werkstücks 11.

Formatbearbeiten kann hierbei beispielsweise das Formatbearbeiten der schmalen Seitenfläche 19 des Werkstücks 11 mit einem Fräswerkzeug umfassen. Anschließend kann mittels einer Kantenanbringvorrichtung einer Schmalflächenveredelungseinrichtung (26) eine Kante auf die schmale Seitenfläche 19 des Werkstücks aufgebracht werden und diese im Anschluss mittels der Schmalflächenveredelungseinrichtung (26) veredelt werden. Die Schmalflächenveredelungseinrichtung (26) ist in dem gezeigten Beispiel in Förderrichtung nicht verstellbar, sie kann jedoch ebenfalls in Förderrichtung verstellbar ausgeführt sein.

Daraufhin wird das Werkstück 11 in einer Messeinrichtung 18 vermessen. Die Messeinrichtung 18 kann dabei als eine Einheit ausgeführt sein, welche dazu ausgebildet ist die gesamte Breite quer zur Förderrichtung zu vermessen oder die Messeinrichtung 18 kann beispielsweise in zwei Teilmesseinrichtungen 18' und 18'' unterteilt sein, welche jeweils eine der schmalen Seitenflächen messen. Alternativ ist es ferner möglich lediglich die der Ausrichteinrichtung 14 gegenüberliegende schmale Seitenfläche zu vermessen. Die Messeinrichtung 18 ist ferner dazu ausgebildet beim Vermessen der schmalen Seitenfläche auch die Dicke der aufgebrachten Kante zu vermessen.

Bevorzugt werden jedoch die bearbeitete erste schmale Seitenfläche 19 sowie die ihr gegenüberliegende zweite schmale Seitenfläche 21 vermessen. Auf diese Weise kann festgestellt werden, ob das Werkstück 11 den nach dem Formatbearbeiten geforderten Abmessungen, insbesondere hinsichtlich der Breite des Werkstücks quer zu der Förderrichtung, entspricht. Dies ist notwendig, da zum Einen die Werkstücke 11 fertigungsbedingt geringe Toleranzen in ihren Abmessungen aufweisen und zum Anderen, da das Kantenband fertigungsbedingt ebenfalls Toleranzen in seinen Abmessungen aufweist.

Die von der Messeinrichtung 18 ermittelten Maße für die Breite des Werkstücks 11 werden in einer Steuereinrichtung 22 gespeichert und weiterverarbeitet, so dass, wenn die zweite schmale Seitenfläche 21 bearbeitet wird, die Ausrichteinheit 14 und/oder die Formatbearbeitungseinrichtung 16 so quer zu der Förderrichtung verfahren werden können, dass das Werkstück 11 von der Formatbearbeitungseinrichtung 16 so bearbeitet werden kann, dass nach dem Formatbearbeiten, dem Aufbringen und Veredeln einer Kante die geforderten Abmessungen für das Werkstück 11 hinsichtlich der Toleranzen erfüllt werden. Das Toleranzband kann beispielsweise bei einem Werkstück 11 mit einer Breite von bis zu 2000mm ± 1mm betragen.

Dabei gibt die Steuereinrichtung 22 der Ausrichteinheit 14 und/oder der Formatbearbeitungseinrichtung 16 den Verstellweg vor. Die Steuereinrichtung 22 berücksichtigt dabei insbesondere das von der Messeinrichtung 18 ermittelte Maß, welches sie mit dem für das Werkstück 11 zu erwarteten Maß vergleicht. Auf diese Weise ist es der Steuereinrichtung 22 möglich, Rückschlüsse über die Breite der momentan aufgebrachten Kante zu ziehen und die Formatbearbeitungseinrichtung 16 so einzustellen, dass ein entsprechendes Übermaß des Werkstücks 11 von der zweiten schmalen Seitenfläche 21 vor dem Aufbringen und Veredeln einer Kante auf diese Seitenfläche 21 abgetragen wird, so dass nach dem Aufbringen und Veredeln einer Kante durch die Schmalflächenveredelungseinrichtung (26) das Werkstück 11 den geforderten Maßen entspricht.

Die Steuereinrichtung 22 ist mit sämtlichen Einheiten der Bearbeitungsvorrichtung 10 verbunden, so dass Daten, wie z. B. Messergebnisse, übermittelt und ausgetauscht werden können.

Nach dem Bearbeiten der ersten schmalen Seitenfläche 19 und der ihr gegenüberliegenden zweiten schmalen Seitenfläche 21 kann das Werkstück 11 erneut in die Bearbeitungsvorrichtung 10 eingebracht werden und bei entsprechender Drehung des Werkstücks 11 können die beiden verbleibenden dritten und vierten schmalen Seitenflächen des Werkstücks bearbeitet werden. Dies wird im Wesentlichen in Analogie zur ersten 19 und zur zweiten 21 schmalen Seitenfläche durchgeführt. Auf diese Weise ist eine Bearbeitung aller vier schmaler Seitenflächen eines Werkstücks möglich.

Um das manuelle erneute Einführen eines Werkstücks 11 in die Bearbeitungsvorrichtung 10 zur Bearbeitung einer weiteren schmalen Seitenfläche zu erleichtern, kann eine Rückführeinrichtung, insbesondere eine Rückführeinrichtung mit einer Dreheinrichtung zum horizontalen Drehen des Werkstücks 11, zum Zurückführen der Werkstücke vorgesehen sein. Diese Rückführeinrichtung ist der Messeinrichtung 18 nachgeordnet vorzusehen und nimmt die Werkstücke 11 von der Fördereinrichtung auf und fördert die Werkstücke 11 zu der Werkstückzuführung 20. Die Rückführeinrichtung ist in den Figuren nicht gezeigt.

Während dem Rückführen der Werkstücke 11 durch die Rückführeinrichtung dreht die Dreheinrichtung die Werkstücke, so dass die Werkstücke 11 jeweils "richtig" ausgerichtet auf der Werkstückzuführung 20 abgelegt werden.

Fig. 2 zeigt exemplarisch die Bearbeitung der zweiten schmalen Seitenfläche 21 eines Werkstücks 11 durch die Formatbearbeitungseinrichtung 16, wobei die Formatbearbeitungseinrichtung 16 zur Korrektur eines Übermaßes des Werkstücks 11 verglichen mit dem in Fig. 1 gezeigtem Zustand, welcher in Fig. 2 gestrichelt dargestellt ist, in Richtung der Fördereinrichtung 12 bzw. des Werkstücks 11 verfahren wurde, um ein entsprechendes Übermaß der zweiten schmalen Seitenfläche 21 entsprechend zu bearbeiten bzw. abzufräsen.

In einer weiteren Ausgestaltung der erfindungsgemäßen Bearbeitungsvorrichtung 10 ist es ferner vorgesehen, dass eine Kantenmesseinrichtung 28 zum Messen der Abmessungen, insbesondere der Dicke des Kantenmaterials 29, welches besonders bevorzugt auf einer Rolle aufgerollt ist, in der Formatbearbeitungseinrichtung 16 vorgesehen ist. Auf diese Weise kann die Dicke des Kantermaterials 29 kontinuierlich überwacht werden, wobei eine Verstellung der Formatbearbeitungseinrichtung 16 während der Formatbearbeitung des Werkstücks 11 durch die Formatbearbeitungseinrichtung 16 nicht erfolgt, da dies einen ungleichmäßigen Formatbearbeitungsverlauf bedingen würde.

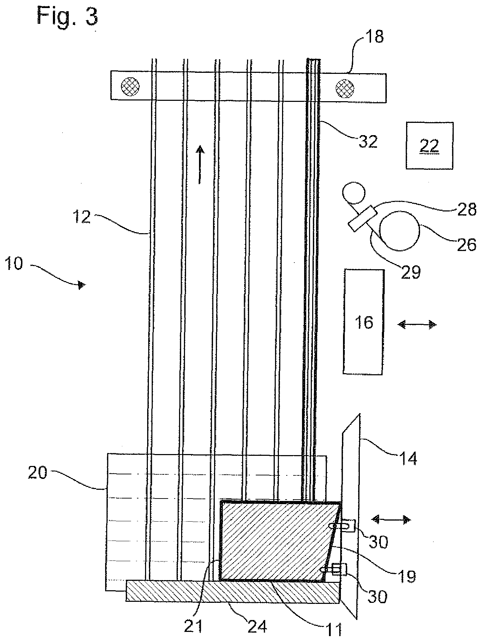

Fig. 3 zeigt eine weitere Ausführungsform einer erfindungsgemäßen Bearbeitungsvorrichtung 10, welche ferner dazu geeignet ist nicht rechteckige bzw. nicht winkelhaltige Werkstücke 11 zu bearbeiten, indem das Werkstück 11 in Abhängigkeit einer gewünschten Endausrichtung ausgerichtet wird. Das Werkstück 11 wird dazu entweder parallel zum Winkelanschlag 24 oder parallel zur Ausrichteinheit 14 ausgerichtet und mittels zweier Greifelemente 30 fixiert und durch die Bearbeitungsvorrichtung 10 gefördert.

Um die zweite schmale Seitenfläche 21 eines nicht rechteckigen Werkstücks 11 genau bearbeiten zu können, ist es zweckmäßig, mindestens zwei Messeinrichtungen 18 auf der der Formatbearbeitungseinrichtung 16 gegenüberliegenden Seite vorzusehen, welche in Förderrichtung hintereinander angeordnet sind (nicht gezeigt in Fig. 3) und so diese schmale Seitenfläche nach der Bearbeitung der ersten schmalen Seitenfläche zu vermessen. Alternativ kann eine Messeinrichtung 18 auf der der Formatbearbeitungseinrichtung 16 gegenüberliegenden Seite vorgesehen sein, welche die gesamte schmale Seitenfläche während dem Fördern des Werkstücks vermisst.

Auf diese Weise kann die zweite schmale Seitenfläche 21 nach der Bearbeitung der ersten schmalen Seitenfläche 19 durch die eine oder die mindestens zwei Messeinrichtungen 18 vermessen werden und so eine etwaige nicht winkelhaltige zweite Seitenfläche 21 ermittelt werden und die nachfolgende Ausrichtung und Bearbeitung der zweiten Seitenfläche 21 entsprechend durchgeführt werden. Eine nachfolgende etwaige Bearbeitung der dritten und vierten Seitenflächen des Werkstücks 11 kann in analoger Weise erfolgen.

Die Greifelemente 30 können ferner dazu verwendet werden, um nicht rechteckige Werkstücke 11 herzustellen. Dazu werden die Werkstücke 11 an der Ausrichteinheit 14 ausgerichtet und anschließend mittels der Greifelemente 30 fixiert und durch die Bearbeitungsvorrichtung 10 gefördert.

Ferner kann die Ausrichteinheit 14 in Förderrichtung unterteilt und jeweils getrennt verfahrbar ausgeführt sein. So ist es möglich, zwei hintereinander angeordnete Werkstücke 11 unterschiedlich auszurichten und die Auslastung der Bearbeitungsvorrichtung zu erhöhen, da die Ausrichteinheit nicht für jedes Werkstück vollständig verfahren werden muss.

## Patentansprüche

1. Bearbeitungsvorrichtung (10) zur Bearbeitung von plattenförmigen Werkstücken (11), welche bevorzugt zumindest abschnittsweise aus Holz, Holzwerkstoffen, Kunststoff oder dergleichen bestehen, umfassend:
- eine Fördereinrichtung (12) zum Fördern der plattenförmigen Werkstücke (11) in einer Förderrichtung, und
- eine Formatbearbeitungseinrichtung (16) zum Formatbearbeiten zumindest einer ersten schmalen Seitenfläche (19) des Werkstücks (11),
wobei
eine Messeinrichtung (18) zum Vermessen der plattenförmigen Werkstücke (11) der Formatbearbeitungseinrichtung (16) in Förderrichtung nachgeordnet vorgesehen ist,
**dadurch gekennzeichnet, dass**
die Vorrichtung ferner eine Ausrichteinheit (14) zum Ausrichten der Werkstücke (11) auf der Fördereinrichtung (12), wobei die Ausrichteinheit (14) in einer von der Förderrichtung abweichenden Richtung verstellbar ist,
eine Steuereinrichtung (22) aufweist, die eingerichtet ist, die Ausrichteinheit (14) in Abhängigkeit von einem Messergebnis der Messeinrichtung (18) in einer von der Förderrichtung abweichenden Richtung zu verstellen, und die Fördereinrichtung (12) eine Rückführeinrichtung mit einer Dreheinrichtung zum horizontalen Drehen der Werkstücke (11) zum Zurückführen der Werkstücke aufweist.

2. Bearbeitungsvorrichtung nach Anspruch 1, **dadurch gekennzeichnet, dass** die Messeinrichtung (18) mindestens zwei Messeinheiten aufweist, die bevorzugt gegenüberliegend angeordnet sind.

3. Bearbeitungsvorrichtung nach Anspruch 1 oder 2, bei der zumindest eine Messeinheit der Messeinrichtung (18) auf der der Formatbearbeitungseinrichtung (16) gegenüberliegenden Seite vorgesehen ist.

4. Bearbeitungsvorrichtung nach einem der vorhergehenden Ansprüche, **dadurch gekennzeichnet, dass** die Bearbeitungsvorrichtung (10) ferner eine Schmalflächenveredelungseinrichtung (26), insbesondere Kantenanbringvorrichtung aufweist.

5. Bearbeitungsvorrichtung nach einem der vorhergehenden Ansprüche, **dadurch gekennzeichnet, dass** eine Kantenmesseinrichtung (28) zum Messen der Abmessungen, insbesondere der Dicke des Kantenmaterials (29), vorgesehen ist.

6. Bearbeitungsvorrichtung nach einem der vorhergehenden Ansprüche, **dadurch gekennzeichnet, dass** die Steuereinrichtung (22) eingerichtet ist, die Ausrichteinheit (14) und/oder die Formatbearbeitungseinrichtung (16) in Abhängigkeit von einem Messergebnis der Kantenmesseinrichtung in einer von der Förderrichtung abweichenden Richtung zu verstellen.

7. Bearbeitungsvorrichtung nach einem der vorhergehenden Ansprüche, **dadurch gekennzeichnet, dass** die Ausrichteinheit (14) mindestens zwei verfahrbare Greifelemente aufweist.

8. Bearbeitungsvorrichtung nach einem der vorhergehenden Ansprüche, **dadurch gekennzeichnet, dass** die Formatbearbeitungseinrichtung (16) in einer von der Förderrichtung abweichenden Richtung verstellbar ist, wobei die Steuereinrichtung (22) eingerichtet ist, die Formatbearbeitungseinrichtung (16) in Abhängigkeit von einem Messergebnis der Messeinrichtung (18) in einer von der Förderrichtung abweichenden Richtung zu verstellen.

9. Bearbeitungsverfahren zum Bearbeiten von plattenförmigen Werkstücken, welche bevorzugt zumindest abschnittsweise aus Holz, Holzwerkstoffen, Kunststoff oder dergleichen bestehen, unter Verwendung der Vorrichtung nach einem der vorhergehenden Ansprüche, umfassend folgende Schritte:
- Fördern des plattenförmigen Werkstücks (11) in einer Fördereinrichtung (12) in Richtung einer Förderrichtung
- Formatbearbeiten zumindest einer ersten schmalen Seitenfläche (19) des Werkstücks (11) durch eine Formatbearbeitungseinrichtung (16),
**dadurch gekennzeichnet, dass**
das Verfahren ferner das Ausrichten des Werkstücks (11) an einer Ausrichteinheit (14) zum Ausrichten der Werkstücke (11) auf der Förderrichtung (12) umfasst,
die Ausrichteinheit (14) in einer von der Förderrichtung abweichenden Richtung verstellt wird, und die Werkstücke (11) nach dem Vermessen durch die Messeinrichtung (18) mittels einer Rückführeinrichtung erneut der Bearbeitungsvorrichtung (10) zugeführt werden, wobei die Werkstücke (11) in der Rückführeinrichtung durch eine Dreheinrichtung gedreht werden können.

10. Bearbeitungsverfahren nach Anspruch 9, **dadurch gekennzeichnet, dass** nach dem Formatbearbeiten der ersten schmalen Seitenfläche (19) des Werkstücks (11) mindestens eine zweite, der ersten Seitenfläche (19) gegenüberliegende schmale Seitenfläche (21) des Werkstücks (11) bearbeitet wird, wobei die Verstellung der Ausrichteinheit (14) und/oder der Formatbearbeitungseinrichtung (16) in Anhängigkeit des Messergebnisses der Messeinrichtung (18) erfolgt.

11. Bearbeitungsverfahren nach Anspruch 9 oder 10, **dadurch gekennzeichnet, dass** die Formatbearbeitungseinrichtung (16) in einer von der Förderrichtung abweichenden Richtung verstellt wird.

## Claims

1. Processing apparatus (10) for the processing of panel-like workpieces (11) which are preferably in at least one section made from wood, derived timber products, plastic or the like, comprising:
- a conveying device (12) for conveying the panel-like workpieces (11) in a direction of conveying, and
- a sizing device (16) for sizing at least one first narrow side surface (19) of the workpiece (11),
wherein
a measuring device (18) is provided for measuring the panel-like workpieces (11), mounted behind the sizing device (16) in the direction of conveying,
**characterised in that**
the apparatus further has an aligning unit (14) for aligning the workpieces (11) on the conveying device (12), wherein the aligning unit (14) is adjustable in a direction different to the direction of conveying,
a control device (22) which is designed to adjust the aligning unit (14) as a function of a measurement result of the measuring device (18) in a direction different to the direction of conveying, and
the conveying device (12) has a return device with a rotating device for horizontally rotating the workpieces (11) for return of the workpieces.

2. Processing apparatus according to claim 1, **characterised in that** the measuring device (18) has at least two measuring units which are preferably arranged in opposition.

3. Processing apparatus according to claim 1 or 2, in which at least one measuring unit of the measuring device (18) is provided on the side opposite the sizing device (16).

4. Processing apparatus according to any of the preceding claims, **characterised in that** the processing apparatus (10) further has a narrow-surface finishing device (26), in particular an edge-applying device.

5. Processing apparatus according to any of the preceding claims, **characterised in that** an edge measuring device (28) for measuring the dimensions, in particular the thickness, of the edge material (29) is provided.

6. Processing apparatus according to any of the preceding claims, **characterised in that** the control device (22) is designed to adjust the aligning unit (14) and/or the sizing device (16) as a function of a measurement result of the edge measuring device in a direction different to the direction of conveying.

7. Processing apparatus according to any of the preceding claims, **characterised in that** the aligning unit (14) has at least two movable gripping elements.

8. Processing apparatus according to any of the preceding claims, **characterised in that** the sizing device (16) is adjustable in a direction different to the direction of conveying, wherein the control device (22) is designed to adjust the sizing device (16) as a function of a measurement result of the measuring device (18) in a direction different to the direction of conveying.

9. Processing method for processing panel-like workpieces which are preferably in at least one section made from wood, derived timber products, plastic or the like, using the apparatus according to any of the preceding claims, comprising the following steps:
- conveying the panel-like workpiece (11) in a conveying device (12) in the direction of a conveying direction
- sizing of at least one first narrow side surface (19) of the workpiece (11) by a sizing device (16),
**characterised in that**
the method further comprises alignment of the workpiece (11) on an aligning unit (14) for aligning the workpieces (11) on the conveying device (12),
the aligning unit (14) is adjusted in a direction different to the direction of conveying, and after measurement by the measuring device (18) the workpieces (11) are returned to the processing apparatus (10) again by means of a return device, wherein the workpieces (11) can be rotated in the return device by a rotating device.

10. Processing method according to claim 9, **characterised in that**, after sizing of the first narrow side surface (19) of the workpiece (11), at least one second narrow side surface (21) of the workpiece (11) opposite the first side surface (19) is processed, wherein adjustment of the aligning unit (14) and/or of the sizing device (16) takes place as a function of the measurement result of the measuring device (18).

11. Processing method according to claim 9 or 10, **characterised in that** the sizing device (16) is adjusted in a direction different to the direction of conveying.

## Revendications

1. Dispositif de façonnage (10) pour façonner des pièces (11) en forme de panneaux qui sont constituées de manière préférée au moins par endroits de bois, de matériaux dérivés du bois, de plastique ou de matériaux similaires, comprenant :
- un système de transport (12) pour transporter les pièces (11) en forme de panneaux dans un sens de transport, et
- un système de façonnage de format (16) pour façonner au format au moins une première surface latérale (19) étroite de la pièce (11),
un système de mesure (18) pour mesurer les pièces (11) en forme de panneaux étant prévu en aval du système de façonnage de format (16) dans le sens de transport,
**caractérisé en ce que**
le dispositif comporte en outre une unité d'orientation (14) pour orienter les pièces (11) sur le système de transport (12), l'unité d'orientation (14) pouvant être déplacée dans un sens s'écartant du sens de transport,
il présente un système de commande (22) qui est configuré pour déplacer l'unité d'orientation (14) en fonction d'un résultat de mesure du système de mesure (18) dans un sens s'écartant du sens de transport, et
le système de transport (12) présente un système de retour pourvu d'un système de rotation pour la rotation horizontale des pièces (11) pour faire revenir les pièces.

2. Dispositif de façonnage selon la revendication 1, **caractérisé en ce que** le système de mesure (18) présente au moins deux unités de mesure, qui sont disposées de manière préférée à l'opposé l'une de l'autre.

3. Dispositif de façonnage selon la revendication 1 ou 2, où au moins une unité de mesure du système de mesure (18) est prévue sur le côté opposé au système de façonnage de format (16).

4. Dispositif de façonnage selon l'une quelconque des revendications précédentes, **caractérisé en ce que** le dispositif de façonnage (10) présente en outre un système d'amélioration de surface étroite (26), notamment un dispositif d'installation de chant.

5. Dispositif de façonnage selon l'une quelconque des revendications précédentes, **caractérisé en ce qu'**un système de mesure de chant (28) est prévu pour mesurer les dimensions, notamment l'épaisseur du matériau de chant (29).

6. Dispositif de façonnage selon l'une quelconque des revendications précédentes, **caractérisé en ce que** le système de commande (22) est configuré pour déplacer l'unité d'orientation (14) et/ou le système de façonnage de format (16) en fonction d'un résultat de mesure du système de mesure de chant dans un sens s'écartant du sens de transport.

7. Dispositif de façonnage selon l'une quelconque des revendications précédentes, **caractérisé en ce que** l'unité d'orientation (14) présente au moins deux éléments de préhension mobiles.

8. Dispositif de façonnage selon l'une quelconque des revendications précédentes, **caractérisé en ce que** le système de façonnage de format (16) peut être déplacé dans un sens s'écartant du sens de transport, le système de commande (22) étant configuré pour déplacer le système de façonnage de format (16) en fonction d'un résultat de mesure du système de mesure (18) dans un sens s'écartant du sens de transport.

9. Procédé de façonnage pour façonner des pièces en forme de panneaux, qui sont constituées de manière préférée au moins par endroits de bois, de matériaux dérivés du bois, de plastique ou de matériaux similaires, en utilisant le dispositif selon l'une quelconque des revendications précédentes, comprenant les étapes suivantes consistant à :
- transporter la pièce (11) en forme de panneau dans un système de transport (12) dans le sens d'un sens de transport,
- façonner au format au moins une première surface latérale (19) étroite de la pièce (11) avec un système de façonnage de format (16),
**caractérisé en ce que**
le procédé comprend en outre l'orientation de la pièce (11) sur une unité d'orientation (14) pour orienter les pièces (11) sur le système de transport (12), l'unité d'orientation (14) est déplacée dans un sens s'écartant du sens de transport et, après la mesure par le système de mesure (18), les pièces (11) sont amenées à nouveau au dispositif de façonnage (10) au moyen d'un système de retour, les pièces (11) pouvant être tournées dans le système de retour par un système de rotation.

10. Procédé de façonnage selon la revendication 9, **caractérisé en ce que**, après le façonnage de format de la première surface latérale (19) étroite de la pièce (11), au moins une deuxième surface latérale (21) étroite, située à l'opposé de la première surface latérale (19), de la pièce (11) est façonnée, le déplacement de l'unité d'orientation (14) et/ou du système de façonnage de format (16) s'effectuant en fonction du résultat de mesure du système de mesure (18).

11. Procédé de façonnage selon la revendication 9 ou 10, **caractérisé en ce que** le système de façonnage de format (16) est déplacé dans un sens s'écartant du sens de transport.
